# EUROPEAN PATENT SPECIFICATION

(11) **EP 3 305 435 B1**
(45) Date of publication and mention of the grant of the patent: **05.06.2019**
(21) Application number: 17195743.4
(22) Date of filing: 10.10.2017
(51) Int. Cl.: B22C 1/16, B22C 1/18, B22C 1/22, B22C 9/02, B22C 9/10, B22C 13/12

(54) **METHOD AND SYSTEM FOR CREATING A SAND CORE FOR A SAND CASTING PROCESS**
VERFAHREN UND SYSTEM ZUR ERZEUGUNG EINES SANDKERNS FÜR EIN SANDGUSSVERFAHREN
PROCÉDÉ ET SYSTÈME PERMETTANT DE CRÉER UN NOYAU DE SABLE POUR UN PROCESSUS DE COULÉE EN SABLE

(30) Priority: 10.10.2016 SE 1651322
(43) Date of publication of application: 11.04.2018
(73) Proprietor: Swerea SWECAST AB, 550 02 Jönköping (SE)
(72) Inventor: GOTTE, Anders, 564 36 Bankeryd (SE)
(74) Representative: Bergenstråhle Group AB

(56) References cited:
- CN-A- 105 665 632

## Description

### Technical field

The present invention relates to a method and system for creating a sand core for a sand casting process.

### Background

There are different types of casting methods, e.g. permanent mould casting and sand mould casting. Sand casting can be used for most metals and the method can be adopted for different alloys and batch sizes. Sand cores are used to produce internal cavities in the sand casting process. Both the sand mould and the sand core are normally disposable items that are destroyed during casting. Sand moulds and sand cores can be produced in a number of different ways. Normally, the sand grains are bonded together using a binder.

In conventional core making, the sand and binder material are mixed in a sand mixer and the mix is blown into a core box using a core shooter. The sand core is often cured by introducing a gaseous agent into the core box. Sand moulds and sand cores are normally produced by compacting the sand mixed with a cold setting binder or by compacting the sand mixed with bentonite clay.

Sand cores are placed inside the sand mould to produce cavities. During casting both the sand core and the sand mould will be exposed to the high temperatures of liquid metal. The melt solidifies inside the mould cavity and the casting is formed.

3D printing/additive manufacturing technologies have in recent years advanced the manufacturing of sand moulds and sand cores. Binder jetting, which is a specific additive manufacturing technique, can be used to print sand moulds and cores. In the binder jetting technique, a second binder component/liquid curing agent is deposited on a layer of sand and a first binder component using a print head. This is repeated in a layer-by-layer fashion, until the three dimensional structure is completed. After the two binder components are mixed, i.e. after the print operation, the moulds and cores are cured and can be used in the casting process.

During the casting process, i.e. when the moulds and cores are subjected to the heat of the liquid melt, the binder material is combusted under the formation of organic emissions. The emissions are not only hazardous to operators in the foundry, but are also the source of odours that often can be perceived in the vicinity of the foundry. The volatile organic compounds (VOCs) emitted also form condensates on foundry equipment, lowering productivity due to necessary cleaning operations. The gases also form condensates inside the ventilation system, where they can be ignited. Also, the combusted binder material is likely to form bubbles inside the liquid metal, where they are entrapped during solidification, severely impacting the mechanical properties of the casting.

When the melt has solidified, the sand material must be removed from the casting. The part of the sand moulds and cores that have been subjected to high temperatures, i.e. the surface of the sand moulds and cores, can then be removed. However, most of the sand mould and sand core are still bonded together by the binder used in the curing process. Therefore removing the remaining moulds and cores during the so called knock-out process often requires much force and energy.

For large casings, tests have been made to reduce the total sand and binder content by including hollow plastic bodies within the sand cores. However, this is a complicated process with severe risks related to the large total gas volume that might be released if the plastic structure breaks down. Furthermore, including a void inside the core is impacting the robustness of the sand core, which might influence the dimensional stability of the casting. The gas constitutes a major issue as the risk for explosions increases and as small gas bubbles can penetrate the melt. Gas bubbles can be detrimental for the quality of the goods. Further to this, an added production step would be required for creating these hollow sand mould structures. This would further add to the total production cost.

It is therefore desirable to find a method and system, for creating a sand core for a sand casting process, which decreases the combustion of binder material and thus decreasing the organic emissions subsequently leading to fewer negative effects which these emissions are associated with, which simplifies the knock-out processes, which does not affect the production efficiency nor increases the production cost of sand cores compared to conventional methods and systems, which decreases the volume of contaminated and hazardous waste material/sand, which decreases the risk for large and/or small volumes of gas being released into the melt, and which improves or at least not negatively affects the dimensional stability of the sand cores compared to conventional methods and systems. CN105665632 A describes an example of a sand mould 3D printing moulding method and device.

### Summary of invention

An objective of the present invention is thus to accomplish a method and system which decreases the combustion of binder material and thus decreasing the organic emissions subsequently leading to fewer negative effects which these emissions otherwise bring, which simplifies the knock-out processes, which does not affect the production efficiency nor increases the production cost of sand cores compared to conventional methods and systems, which decreases the volume of contaminated and hazardous waste material/sand, which decreases the risk for large and/or small volumes of gas being released into the melt, and which improves or at least not negatively affects the dimensional stability of the sand cores compared to conventional methods and systems.

According to one aspect, the invention concerns a method for creating a sand core for a sand casting process comprising the steps of mixing sand and a first binder component. Wherein the result is a powder. Further supplying a layer of the powder onto a job box. The layer covering a first area. Further supplying a second binder component onto the supplied layer of powder at a first sub-part of the first area. The first area thereby comprising the first sub-part comprising the supplied layer of the powder and the second binder component and a second sub-part comprising the layer of the powder but no second binder component. The first sub-part enclosing the second sub-part. Wherein a cured layer is created at the first sub part when the second binder component and the layer of the powder interact. Further repeating the step of supplying a layer of the powder and the step of supplying a second binder component onto the layer of powder so that a plurality of cured layers are applied on top of each other until a full sand core with a shell comprising the plurality of cured layers is created.

An advantage with the solution, is that the full sand core is not entirely comprised by a second binder component, thus decreasing the total binder content in the full sand core and therefore also the environmentally unfriendly emissions in the subsequent casting process. This is due to the fact that among the first and the second binder component, it is often the second binder component which results in most harmful emissions with regards to human health, odour and volatile organic compounds (VOCs). Lower levels of VOCs subsequently result in lower levels of condensates on foundry equipment and in ventilation systems. Furthermore, after the casting process the knockout process is simplified as the remaining cured material in the full sand core is minimised and the amount of loose sand is maximised. This is in particular advantageous for casting of low melting point metals such as aluminium, since it is often complicated to remove sand cores that are not much thermally affected. Further, the production cost and the production efficiency of sand cores is similar to previously existing production methods. The risk of having large and/or small volumes of gas arising from the sand core penetrating the melt is decreased as the full sand core is solid without any substantial volumes of gas. The sand cores produced with the described method also have improved dimensional stability compared to sand cores comprising e.g. hollow structures. Finally as the remaining cured material is minimised in the waste material, greater amounts of sand with less total content of hazardous components can e.g. be recycled, without the need for energy consuming reclamation steps, and used again in the casting process or used as a landfill material.

The system may be configured according to different optional embodiments. For example, wherein the second binder component may be supplied onto the layer of powder in such a way that the first sub-part has a minimum thickness.

An advantage with the solution is that the full sand core will comprise an even lower total binder content. Therefore also the environmentally unfriendly emissions in the subsequent casting process will be even lower. This is due to the fact that among the first and the second binder component, it is the second binder component which results in most harmful emissions with regards to human health, odour and volatile organic compounds (VOCs). Lower levels of VOCs subsequently result in lower levels of condensates on foundry equipment and in ventilation systems. Furthermore, after the casting process the knockout process is even more simplified as the remaining cured material in the full sand core is even more minimised and the amount of loose sand is even more maximised. This is in particular advantageous for casting of low melting point metals such as aluminium, since it is often complicated to remove sand cores that are not much thermally affected. Finally as the remaining cured material here is even lower in the waste material, and even greater amounts of non-hazardous sand can e.g. be recycled and used once again in the casting process or used as a landfill material.

According to an embodiment of the invention, the method may be comprising the step of determining the minimum thickness of the first sub-part so that the shell can resist the heat and pressure in a subsequent casting process step.

An advantage with the solution, is that sand cores produced with the described method will resist the heat and pressure in a subsequent casting process step, they will also have improved dimensional stability compared to sand cores comprising e.g. hollow structures. The sand cores will still result in a lower total binder content, lower generation of environmentally unfriendly emissions in the subsequent casting process, simplified knockout process, and greater amounts of sand with less total content of hazardous components can e.g. be recycled, without the need for energy consuming reclamation steps, and used again in the casting process or used as a landfill material.

According to an embodiment of the invention, the determining of the minimum thickness of the first sub-part may be performed based on calculating an estimation of a thermal energy transferred from a melt that is to be poured onto/outside the full sand core based on a number of parameters, wherein the number of parameters to be taken into account include one or more of the temperature of the melt, the structural strength of the second binder component, the type of sand used, the size of the sand particles.

An advantage with the solution, is that by conducting these calculations the full sand core will even better resist the heat and pressure in a subsequent casting process step. The sand cores will also have even more improved dimensional stability compared to sand cores with hollow structures. The sand cores will still result in an even lower total binder content, even lower generation of environmentally unfriendly emissions in the subsequent casting process, even more simplified knockout process, and even greater amounts of sand with less total content of hazardous components can e.g. be recycled, without the need for energy consuming reclamation steps, and used again in the casting process or used as a landfill material.

According to an embodiment of the invention, the first binder component may be a no-bake binder such as a phenolic binder, a furan binder or a silicate binder among others.

An advantage with the solution, is that the above mentioned substances are all suitable for functioning as first binder components.

According to an embodiment of the invention, the step of supplying a second binder component also comprises supplying the second component at the second sub-part in a pattern that creates at least a truss member when the second binder component and the layer of the powder interact in the pattern of the second sub-part.

An advantage with the solution, is that a truss work comprising at least one truss member will increase the dimensional stability of the full sand core even further compared to only having a cured shell.

According to an embodiment of the invention, the method may comprise the steps of starting a casting process by pouring a melt around the created full sand core and letting the melt solidify. Removing remaining material originating from the first sub-part and the powder not supplied with the second binder component when the melt has substantially solidified.

An advantage with the solution, is that by removing both the remaining material from the first sub-part and the powder not supplied with the second binder component will release the casting product from unwanted material.

According to a second aspect of the invention a system provided to create a sand core for a sand casting process is accomplished, comprising a mixing unit arranged for mixing sand and a first binder component into a powder, a first supplying unit connected to the mixing unit arranged for supplying a layer of the powder onto a job box, the layer covering a first area, a second supplying unit arranged for supplying a second binder component onto the supplied layer of powder at a first sub-part of the first area. The first area thereby comprising the first sub-part comprising the supplied layer of the powder and the second binder component and a second sub-part comprising the layer of the powder but no second binder component. The first sub-part enclosing the second sub-part. Wherein a cured layer is created at the first sub part when the second binder component and the layer of the powder interact. Wherein the first and the second supplying unit are arranged for repeating the supplying of a layer of the powder and the supplying of a second binder component onto the layer of powder so that a plurality of cured layers are applied on top of each other until a full sand core with a shell comprising the plurality of cured layers is created.

An advantage with the solution, is that the full sand core is not entirely comprised by a second binder component, thus decreasing the total binder content in the full sand core and therefore also the environmentally unfriendly emissions in the subsequent casting process. This is due to the fact that among the first and the second binder component, it is often the second binder component which results in most harmful emissions with regards to human health, odour and volatile organic compounds (VOCs). Lower levels of VOCs subsequently result in lower levels of condensates on foundry equipment and in ventilation systems. Furthermore, after the casting process the knockout process is simplified as the remaining cured material in the full sand core is minimised and the amount of loose sand is maximised. This is in particular advantageous for casting of low melting point metals such as aluminium, since it is often complicated to remove sand cores that are not much thermally affected. Further, the production cost and the production efficiency of sand cores is similar to previously existing production methods. The risk of having large and/or small volumes of gas arising from the sand core penetrating the melt is decreased as the full sand core is solid without any substantial volumes of gas. The sand cores produced with the described method also have improved dimensional stability compared to sand cores comprising e.g. hollow structures. Finally as the remaining cured material is minimised in the waste material, greater amounts of sand with less total content of hazardous components can e.g. be recycled, without the need for energy consuming reclamation steps, and used again in the casting process or used as a landfill material.

A sand core signifies a sand mould or a sand core built up from sand that is cured using binder components.

The described method is also applicable for inorganic binding systems. By using the described method in combination with inorganic binding systems at least the knock-out process is facilitated.

The described method is applicable to binder-jetting printing of sand structures, in which the first component of the binder is pre mixed with the sand and the other component is added by means of a print head. Normal no-bake binders, such as a phenolic binder, furan binder or a silicate binder can be used.

Wherein the binder is a furan binder the first binder component may be an acid such as a sulphuric acid, p-Toluenesulfonic acid among others.

Wherein the binder is a furan binder the second binder component may be a liquid binder component such as a resin and comprised of furfuryl alcohol, bisphenol A, resorcinol and 3-aminopropyltriethoxysilane among others.

It can also be the second binder component which is the less harmful of the two binder components used. Furthermore, the binder component with the highest viscosity is often chosen as the first binder component.

The described method could also be used to create hollow structures.

The layer of the powder can cover a larger area than the first area described in the method, thus creating a surplus of powder outside the first area. For clarification, this powder outside the first area will not comprise the second binder component. This surplus of powder outside the first area will be removed prior to starting the casting process.

The primary function of a binder system is to bond sand particles together. There are many different type of binder systems available on the market which may be suitable for a sand casting process. For binder components to be suitable to be used in sand casting processes, these components have to have certain properties for instance with regards to viscosity. It should also be possible to mix a first component with the sand prior of applying the powder, incorporating both the sand and the first component, onto a job box.

Some binder systems must be cured by heat and some other binder systems are self-curing.

The first binder component may be the acid component of a furan compound. Furan is a heterocyclic organic compound.

The minimum thickness can be determined by defining a start point and an end point of a vector of the layer. Wherein the start point coincides with a periphery point of the sand core that is to be created, the vector extending along a normal of the sand core, and wherein the end point coincides with the intersection of the normal and a corresponding inner wall of the shell of the sand core. Wherein the inner wall of the shell is determined by the minimum thickness needed for the shell to resist the heat and pressure in a subsequent casting process step.

in the method described, untreated powder not enclosed by the full sand core can be removed after the full sand core is created.

Determination of the minimum thickness of the shell of the sand core can be done by using computer simulation software. By doing so the thickness is optimised for minimising the environmentally unfriendly emissions in the subsequent casting process and for maximising the simplification of the knockout process as the remaining cured material in the full sand core is fully minimised and the amount of loose sand is fully maximised. This is in particular advantageous for casting of low melting point metals such as aluminium, since it is often complicated to remove sand cores that are not much thermally affected.

The truss member interconnecting a first and a second periphery point at opposing sides of the periphery of the second sub-part. Wherein the truss member is created by repeating the step of supplying a layer of the powder and the step of supplying a second binder component so that a plurality of layers of the powder are applied on top of each other combined with the second binder component until a truss member is created being strong enough for strengthening the sand core.

The first and the second supplying unit may be combined into one physical unit.

The layers may be cured subsequent to that all layers are applied on top of each other. The full sand core comprising the shell is then finalised when the layers are cured.

### Brief description of drawings

The invention is now described, by way of example, with reference to the accompanying drawings, in which:
Fig. 1 shows a first layer of powder for creating a sand core for a sand casting process in a perspective view, according to an embodiment of the invention, and
Fig. 2-7 show a layer of powder at least partly comprising a second binder component, for creating a sand core for a sand casting process in a perspective view, according to an embodiment of the invention, and
Fig. 8 shows a layer of powder for creating a sand core for a sand casting process in a perspective view, according to an embodiment of the invention, and
Fig. 9 shows a full sand core for a sand casting process in a perspective view, according to an embodiment of the invention, and
Fig. 10 shows a full sand core for a sand casting process in a cutaway perspective view, according to an embodiment of the invention, and
Fig. 11 shows a full sand core for a sand casting process in a transparent perspective view, where all the sand and the first and second binder component are transparent, according to an embodiment of the invention, and
Fig. 12 shows a full sand core comprising two truss members for a sand casting process in a transparent perspective view, where all the sand and the first and second binder component are transparent, according to an embodiment of the invention, and
Fig. 13 shows a system for a sand casting process in a front view comprising a mixing unit, a first supplying unit, a job box, sand and a first binder component being poured into the mixing unit, according to an embodiment of the invention, and
Fig. 14 shows a system for a sand casting process in a transparent perspective view comprising a mixing unit, a first supplying unit, a job box, and a powder according to an embodiment of the invention, and
Fig. 15 shows a system for a sand casting process in a front view comprising a second supplying unit, a job box, and a second binder component being poured into the system, according to an embodiment of the invention, and
Fig. 16 shows a full sand core for a casting process in a perspective view comprising a melt being poured onto/outside the full sand core, according to an embodiment of the invention.
Fig. 17 shows a flow chart which illustrates a method for creating a sand core for a sand casting process. The different activities may be executed in other orders than what is shown in this flow chart with connection to this description. Some of the steps may also be executed in parallel.

### Description of embodiments

In the following, a detailed description of a sand mould enclosing a self-collapsing core is provided.

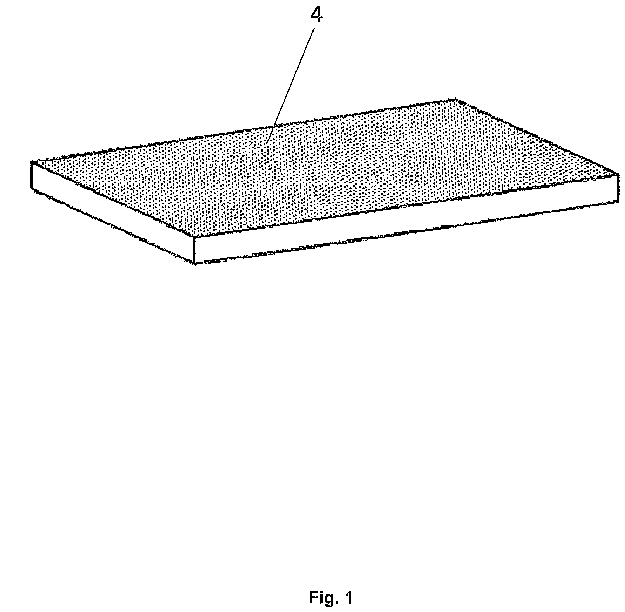

Fig. 1 shows a layer 4 of powder 3 for creating a sand core 11 for a sand casting process in a perspective view, according to an embodiment of the invention. The powder comprising sand 1 and a first binder component 2.

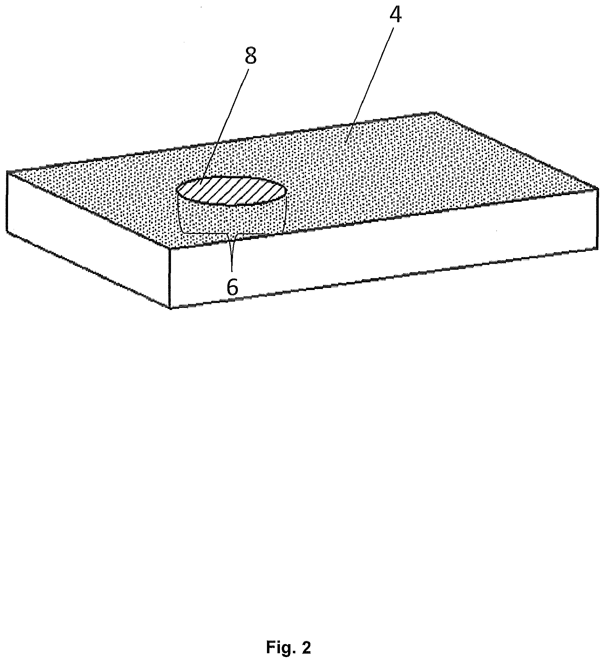

Fig. 2 shows a layer 4 of powder 3, the layer 4 covering at least a first area 6 comprising a first sub part 8, for creating a sand core 11 for a sand casting process in a perspective view, according to an embodiment of the invention. The powder comprising sand 1 and a first binder component 2. The first sub part 8 comprising a second binder component 7.

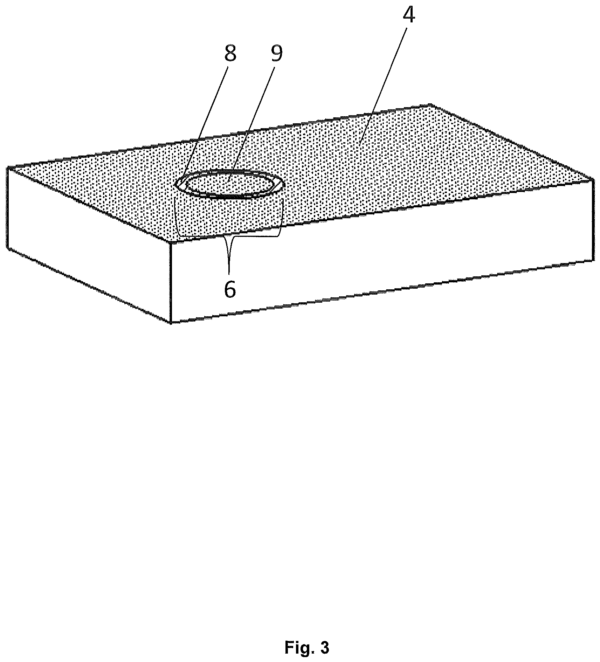

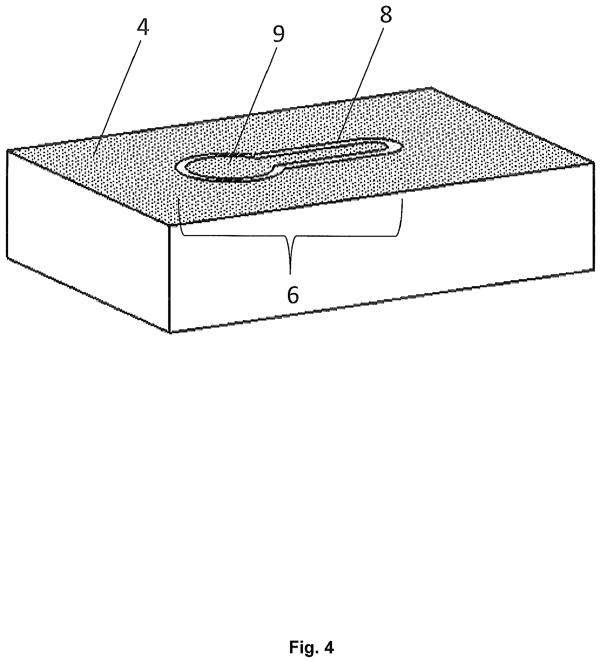

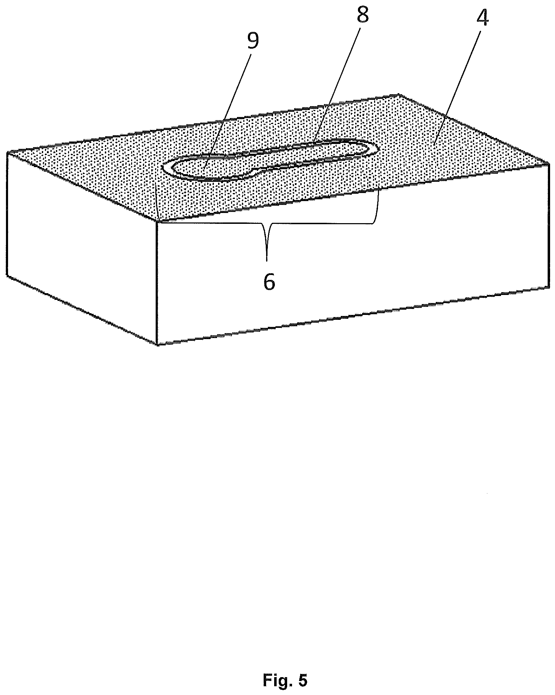

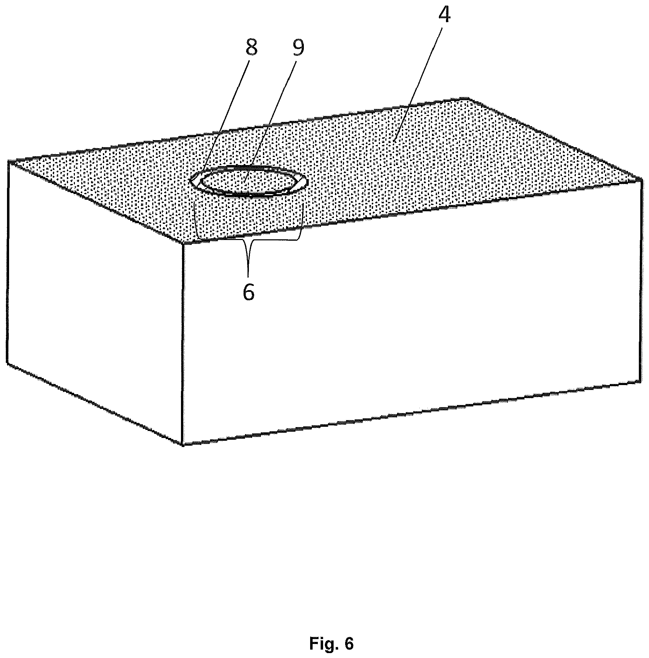

Fig. 3-6 show a layer 4 of powder 3, the layer 4 covering at least a first area 6 comprising a first sub part 8 and a second sub part 9, for creating a sand core 11 for a sand casting process in a perspective view, according to an embodiment of the invention. The powder comprising sand 1 and a first binder component 2. The first sub part 8 comprising a second binder component 7. The second sub part 9 comprising no second binder component 7.

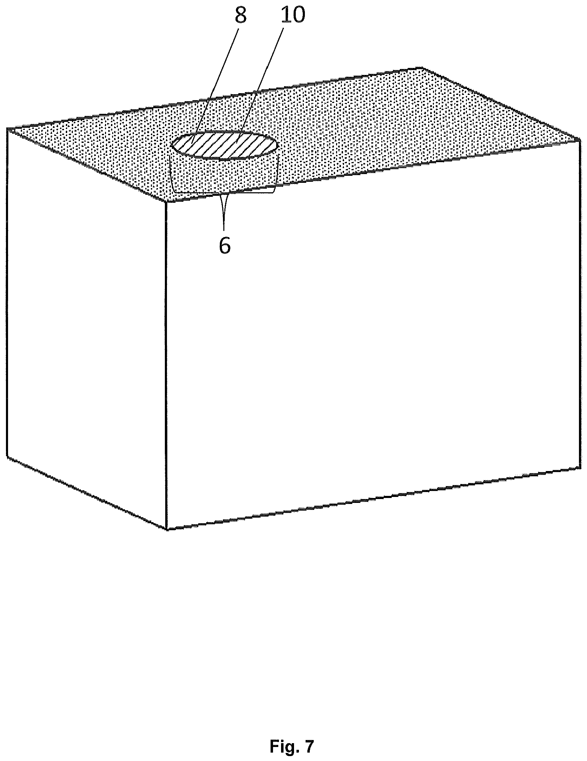

Fig. 7 shows a layer 4 of powder 3, the layer 4 covering at least a first area 6 comprising a first sub part 8, for creating a sand core 11 for a sand casting process in a perspective view, according to an embodiment of the invention. The powder comprising sand 1 and a first binder component 2. The first sub part 8 comprising a second binder component 7.

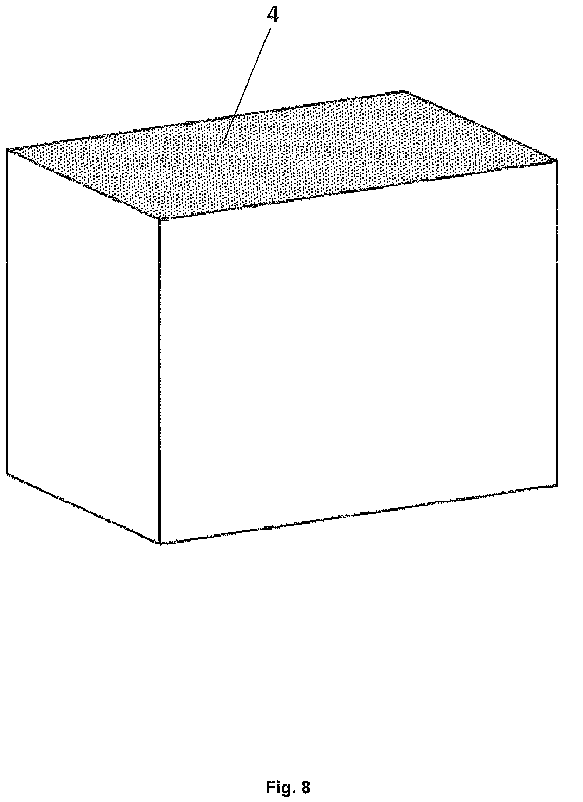

Fig. 8 shows a layer 4 of powder 3 for creating a sand core 11 for a sand casting process in a perspective view, according to an embodiment of the invention. The powder comprising sand 1 and a first binder component 2.

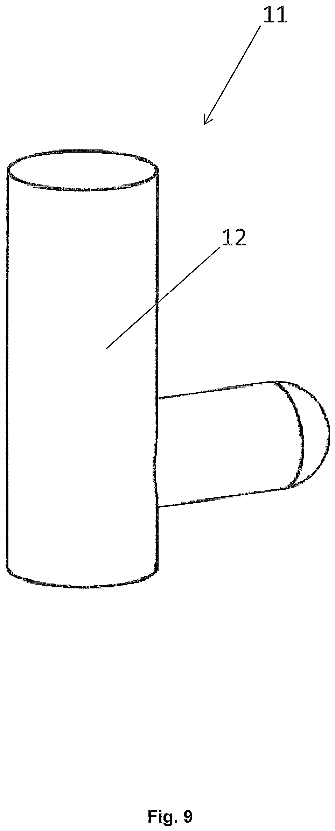

Fig. 9 shows a full sand core 11 comprising a shell 12 in a perspective view, according to an embodiment of the invention.

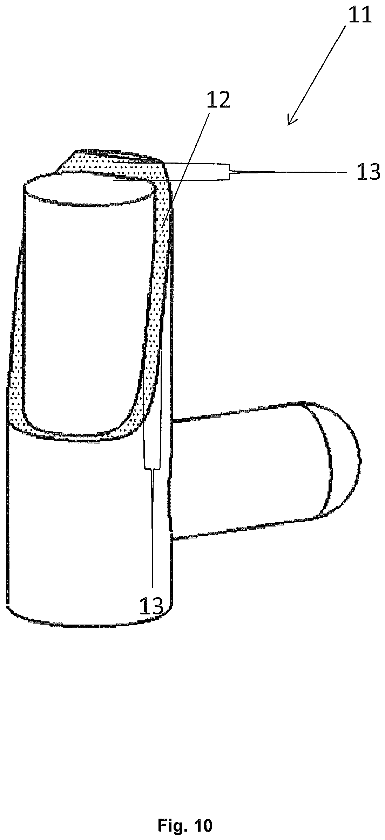

Fig. 10 shows a full sand core 11 comprising a shell 12 in a cutaway perspective view, according to an embodiment of the invention. The shell 12 having a minimum thickness 13.

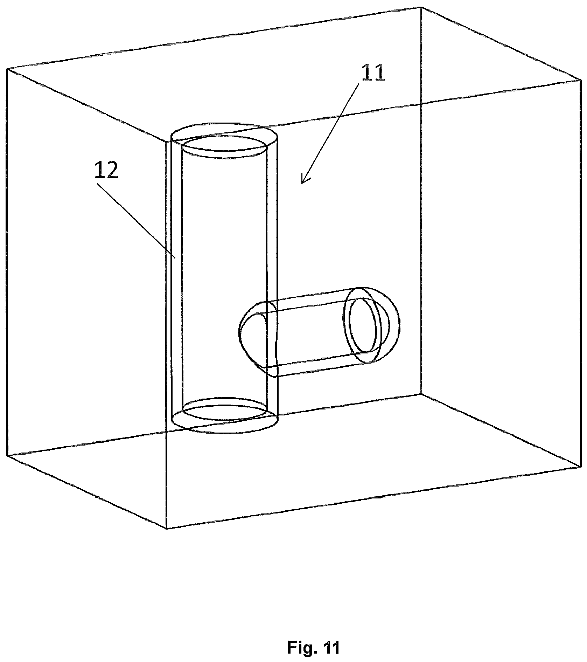

Fig. 11 shows a full sand core 11 comprising a shell 12 in a transparent perspective view, according to an embodiment of the invention.

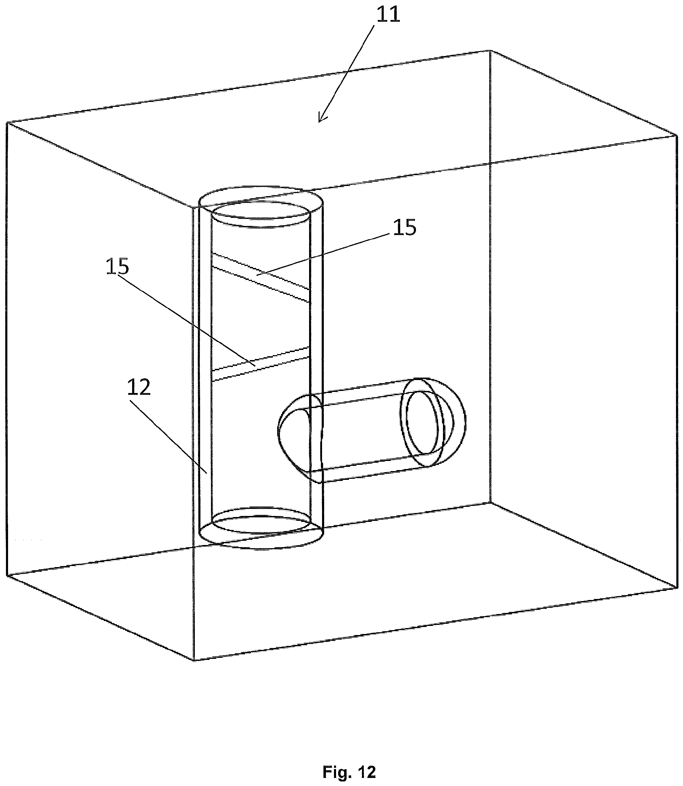

Fig. 12 shows a full sand core 11 comprising a shell 12 in a transparent perspective view, according to an embodiment of the invention. The full sand core 11 comprising truss members 15 connecting opposite internal sides of the shell 12.

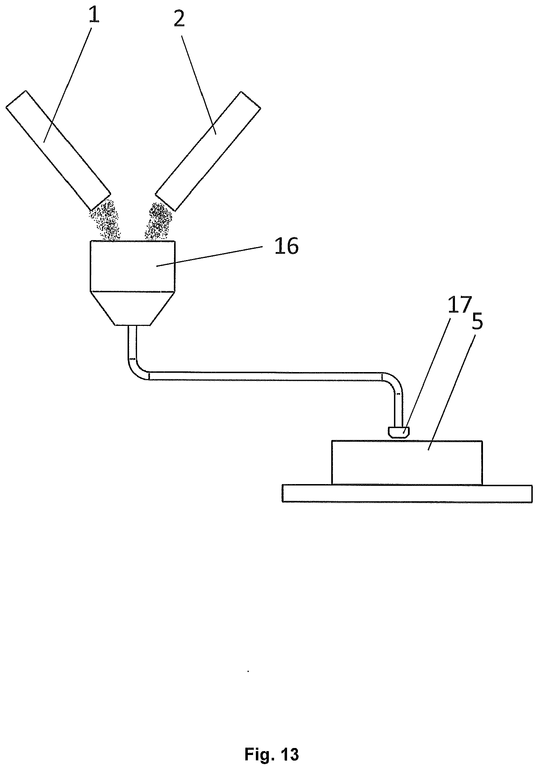

Fig. 13 shows a system for a sand casting process in a front view, according to an embodiment of the invention. The system comprising a mixing unit 16, a first supplying unit 17, a job box 5, sand 1 and a first binder component 2. The sand 1 and the first binder component 2 being poured into the mixing unit 16.

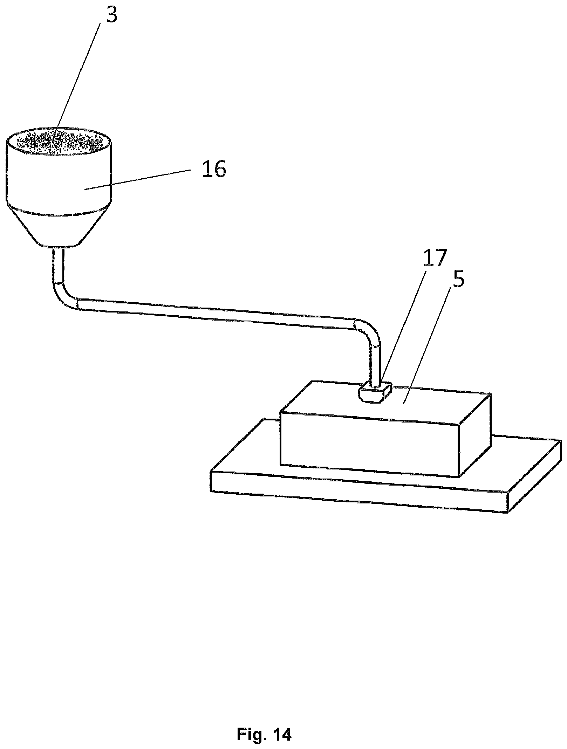

Fig. 14 shows a system for a sand casting process in a perspective view, according to an embodiment of the invention. The system comprising a mixing unit 16, a first supplying unit 17, and a job box 5. The sand 1 and the first binder component 2 now mixed together resulting in a powder 3.

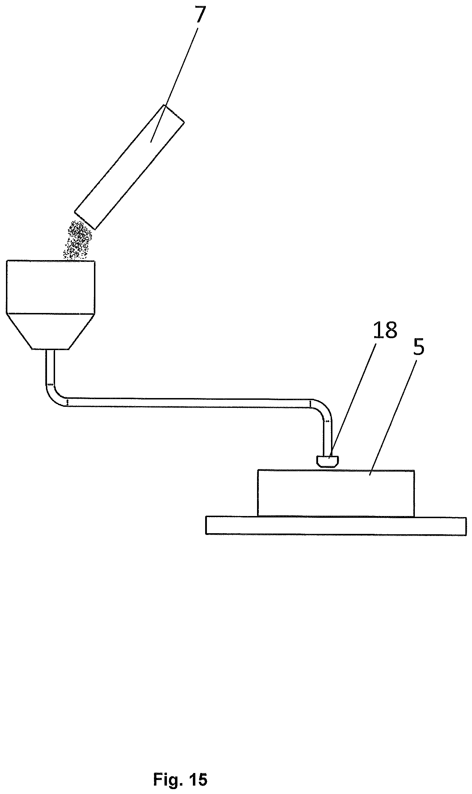

Fig. 15 shows a system for a sand casting process in a front view, according to an embodiment of the invention. The system comprising a second supplying unit 18, a job box 5, and a second binder component 7. The second binder component 7 being distributed via the second supplying unit 18 onto the job box 5.

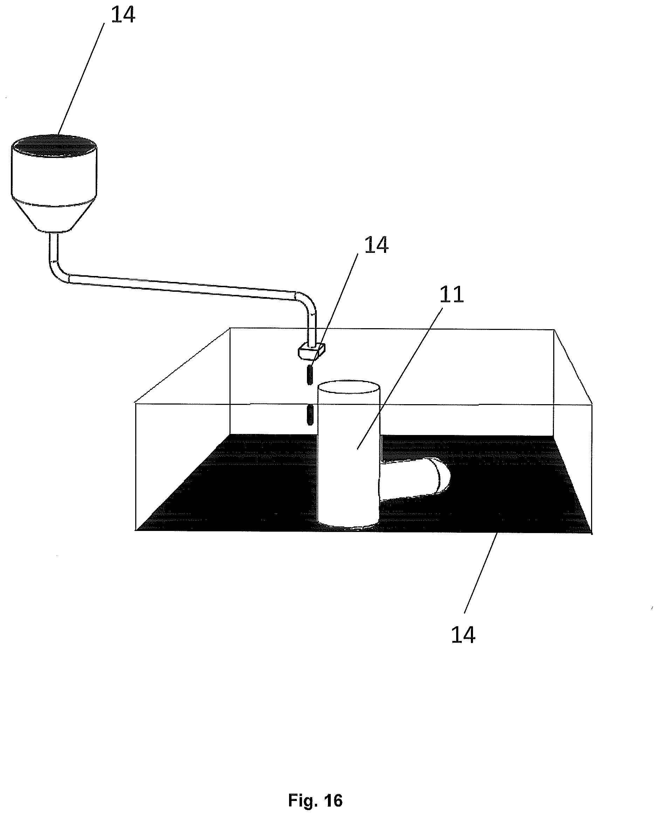

Fig. 16 shows a casting process in a perspective view, according to an embodiment of the invention. The casting process comprising pouring a melt 14 around the created full sand core 11 and subsequently letting the melt 14 solidify.

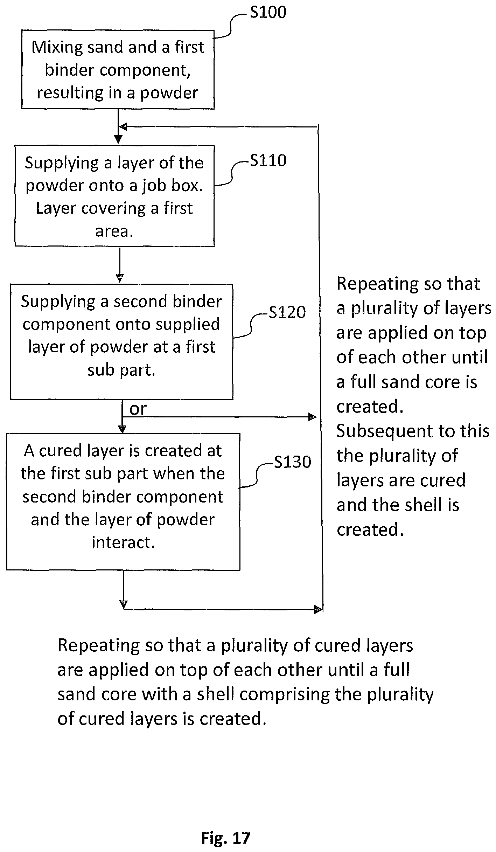

Fig 17. In a step S100 sand 1 and a first binder component 2 are supplied and mixed wherein the result is a powder 3. In a step S110 a layer 4 of the powder 3 are supplied onto a job box 5. The layer 4 covering a first area 6. In a step S120 a second binder component 7 is supplied onto the supplied layer 4 of powder 3 at a first sub-part 8 of the first area 6. The first area 6 thereby comprising the first sub-part 8 comprising the supplied layer 4 of the powder 3 and the second binder component 7 and a second sub-part 9 comprising the layer 4 of the powder 3 but no second binder component 7. The first sub-part 8 enclosing the second sub-part 9. Wherein a cured layer 10 is created at the first sub part 8 when the second binder component 7 and the layer 4 of the powder 3 interact. Repeating the step of supplying a layer 4 of the powder 3 and the step of supplying a second binder component 7 onto the layer 4 of powder 3 so that a plurality of cured layers 4 are applied on top of each other until a full sand core 11 with a shell 12 comprising the plurality of cured layers 4 is created.

## Claims

1. Method for creating a sand core for a sand casting process, comprising the steps of:
mixing sand (1) and a first binder component (2), wherein the result is a powder (3);
supplying a layer (4) of the powder (3) onto a job box (5), the layer (4) covering a first area (6);
supplying a second binder component (7) onto the supplied layer (4) of powder (3) at a first sub-part (8) of the first area (6), the first area (6) thereby comprising the first sub-part (8) comprising the supplied layer (4) of the powder (3) and the second binder component (7) and a second sub-part (9) comprising the layer (4) of the powder (3) but no second binder component (7), the first sub-part (8) enclosing the second sub-part (9), wherein a cured layer (10) is created at the first sub part (8) when the second binder component (7) and the layer (4) of the powder (3) interact;
repeating the step of supplying a layer (4) of the powder (3) and the step of supplying a second binder component (7) onto the layer (4) of powder (3) so that a plurality of cured layers (4) are applied on top of each other until a full sand core (11) with a shell (12) comprising the plurality of cured layers (4) is created.

2. Method for creating a sand core for a sand casting process according to claim 1, wherein the second binder component (7) is supplied onto the layer (4) of powder (3) in such a way that the first sub-part (8) has a minimum thickness (13), wherein the minimum thickness (13) is determined by that the method comprising the step of determining the minimum thickness (13) of the first sub-part (8) so that the shell (12) can resist the heat and pressure in a subsequent casting process step .

3. A method for creating a sand core for a sand casting process according to claim 2, wherein the determining of the minimum thickness (13) of the first sub-part (8) is performed based on calculating an estimation of a thermal energy transferred from a melt (14) that is to be poured onto/outside the full sand core (11) based on a number of parameters, wherein the number of parameters to be taken into account include one or more of the temperature of the melt (14), the structural strength of the second binder component (7), the type of sand (1) used, the size of the sand (1) particles.

4. A method for creating a sand core for a sand casting process according to any of the claims 1-3, wherein the first binder component (2) is a no-bake binder such as a phenolic binder, a furan binder or a silicate binder among others.

5. A method for creating a sand core for a sand casting process according to any of the claims 1-4, wherein the step of supplying a second binder component (7) also comprises supplying the second component (7) at the second sub-part (9) in a pattern that creates at least a truss member (15) when the second binder component (7) and the layer (4) of the powder (3) interact in the pattern of the second sub-part (9).

6. Method for using a sand core created according to the method of any of claims 1-5, comprising the steps of
starting a casting process by pouring a melt (14) around the created full sand core (11) and letting the melt (14) solidify;
removing remaining material originating from the first sub-part (8) and the powder (3) not supplied with the second binder component (7) when the melt (14) has substantially solidified.

7. System provided to create a sand core for a sand casting process, comprising
a mixing unit (16) arranged for mixing sand (1) and a first binder component (2) into a powder (3);
a first supplying unit (17) connected to the mixing unit (16) arranged for supplying a layer (4) of the powder (3) onto a job box (5), the layer covering a first area (6);
a second supplying unit (18) arranged for supplying a second binder component (7) onto the supplied layer (4) of powder (3) at a first sub-part (8) of the first area (6), the first area (6) thereby comprising the first sub-part (8) comprising the supplied layer (4) of the powder (3) and the second binder component (7) and a second sub-part (9) comprising the layer (4) of the powder (3) but no second binder component (7), the first sub-part (8) enclosing the second sub-part (9), wherein a cured layer (4) is created at the first sub part (8) when the second binder component (7) and the layer (4) of the powder (3) interact;
wherein the first (17) and the second supplying unit (18) are arranged for repeating the supplying of a layer (4) of the powder (3) and the supplying of a second binder component (7) onto the layer (4) of powder (3) so that a plurality of cured layers (4) are applied on top of each other until a full sand core (11) with a shell (12) comprising the plurality of cured layers (4) is created.

## Patentansprüche

1. Verfahren zur Erzeugung eines Sandkerns für ein Sandgussverfahren, umfassend die folgenden Schritte:
Mischen von Sand (1) und einer ersten Bindemittelkomponente (2), wobei das Ergebnis ein Pulver (3) ist;
Zuführen einer Schicht (4) des Pulvers (3) auf einen Arbeitskasten (5), wobei die Schicht (4) eine erste Fläche (6) bedeckt;
Zuführen einer zweiten Bindemittelkomponente (7) auf die zugeführte Schicht (4) aus Pulver (3) an einem ersten Teilbereich (8) der ersten Fläche (6), wobei die erste Fläche (6) dadurch den ersten Teilbereich (8), der die zugeführte Schicht (4) des Pulvers (3) und die zweite Bindemittelkomponente (7) umfasst, und einen zweiten Teilbereich (9) umfasst, der die Schicht (4) des Pulvers (3), aber keine zweite Bindemittelkomponente (7) umfasst, wobei der erste Teilbereich (8) den zweiten Teilbereich (9) umgibt, wobei eine gehärtete Schicht (10) am ersten Teilbereich (8) erzeugt wird, wenn die zweite Bindemittelkomponente (7) und die Schicht (4) des Pulvers (3) zusammenwirken;
Wiederholen des Schritts des Zuführens einer Schicht (4) des Pulvers (3) und des Schritts des Zuführens einer zweiten Bindemittelkomponente (7) auf die Schicht (4) aus Pulver (3), so dass eine Mehrzahl gehärteter Schichten (4) aufeinander aufgebracht werden, bis ein vollständiger Sandkern (11) mit einer die Mehrzahl gehärteter Schichten (4) umfassenden Schale (12) erzeugt wird.

2. Verfahren zur Erzeugung eines Sandkerns für ein Sandgussverfahren nach Anspruch 1, wobei die zweite Bindemittelkomponente (7) auf die Schicht (4) aus Pulver (3) zugeführt wird, derart, dass der erste Teilbereich (8) eine Mindestdicke (13) aufweist, wobei die Mindestdicke (13) dadurch bestimmt wird, dass das Verfahren den Schritt des Bestimmens der Mindestdicke (13) des ersten Teilbereichs (8) umfasst, so dass die Schale (12) der Wärme und dem Druck in einem darauffolgenden Gussverfahrensschritt widerstehen kann.

3. Verfahren zur Erzeugung eines Sandkerns für ein Sandgussverfahren nach Anspruch 2, wobei die Bestimmung der Mindestdicke (13) des ersten Teilbereichs (8) auf Basis einer Berechnung einer Schätzung einer Wärmeenergie, die von einer Schmelze (14) übertragen wird, die auf den/außerhalb des vollständigen Sandkern(s) (11) gegossen werden soll, auf Basis einer Anzahl von Parametern durchgeführt wird, wobei die Anzahl von Parametern, die berücksichtigt werden sollen, ein oder mehrere der Temperatur der Schmelze (14), der strukturellen Festigkeit der zweiten Bindemittelkomponente (7), der Art des verwendeten Sandes (1), der Partikelgröße des Sandes (1) beinhaltet.

4. Verfahren zur Erzeugung eines Sandkerns für ein Sandgussverfahren nach einem der Ansprüche 1-3, wobei die erste Bindemittelkomponente (2) ein nichtbackendes Bindemittel, wie etwa unter anderem ein phenolisches Bindemittel, ein Furan-Bindemittel oder ein Silikat-Bindemittel ist.

5. Verfahren zur Erzeugung eines Sandkerns für ein Sandgussverfahren nach einem der Ansprüche 1-4, wobei der Schritt des Zuführens einer zweiten Bindemittelkomponente (7) auch das Zuführen der zweiten Komponente (7) am zweiten Teilbereich (9) in einem Muster umfasst, das zumindest ein Trägerelement (15) erzeugt, wenn die zweite Bindemittelkomponente (7) und die Schicht (4) des Pulvers (3) im Muster des zweiten Teilbereichs (9) zusammenwirken.

6. Verfahren zur Erzeugung eines Sandkerns für ein Sandgussverfahren nach einem der Ansprüche 1-5, umfassend die Schritte des
Beginnens eines Gussverfahrens, indem eine Schmelze (14) um den erzeugten vollständigen Sandkern (11) gegossen wird und die Schmelze (14) sich verfestigen kann;
Entfernen von Materialresten, die vom ersten Teilbereich (8) und dem Pulver (3) herrühren, das nicht mit der zweiten Bindemittelkomponente (7) zugeführt wurde, wenn die Schmelze (14) sich im Wesentlichen verfestigt hat.

7. System, das zur Erzeugung eines Sandkerns für ein Sandgussverfahren bereitgestellt wird, umfassend
eine Mischeinheit (16), die zum Mischen von Sand (1) und einer erste Bindemittelkomponente (2) in ein Pulver (3) angeordnet ist;
eine erste Zuführungseinheit (17), die mit der Mischeinheit (16) verbunden ist und zum Zuführen einer Schicht (4) des Pulvers (3) auf einen Arbeitskasten (5) angeordnet ist, wobei die Schicht eine erste Fläche (6) bedeckt;
eine zweite Zuführungseinheit (18), die zum Zuführen einer zweiten Bindemittelkomponente (7) auf die zugeführte Schicht (4) aus Pulver (3) an einem ersten Teilbereich (8) der ersten Fläche (6) angeordnet ist, wobei die erste Fläche (6) dadurch den ersten Teilbereich (8), der die zugeführte Schicht (4) des Pulvers (3) und die zweite Bindemittelkomponente (7) umfasst, und einen zweiten Teilbereich (9) umfasst, der die Schicht (4) des Pulvers (3), aber keine zweite Bindemittelkomponente (7) umfasst, wobei der erste Teilbereich (8) den zweiten Teilbereich (9) umgibt, wobei eine gehärtete Schicht (4) am ersten Teilbereich (8) erzeugt wird, wenn die zweite Bindemittelkomponente (7) und die Schicht (4) des Pulvers (3) zusammenwirken;
wobei die erste (17) und die zweite Zuführungseinheit (18) dazu angeordnet sind, das Zuführen einer Schicht (4) des Pulvers (3) und das Zuführen einer zweiten Bindemittelkomponente (7) auf die Schicht (4) aus Pulver (3) zu wiederholen, so dass eine Mehrzahl von gehärteten Schichten (4) aufeinander aufgebracht werden, bis ein vollständiger Sandkern (11) mit einer die Mehrzahl gehärteter Schichten (4) umfassenden Schale (12) erzeugt wird.

## Revendications

1. Procédé pour la création d'un noyau en sable pour un processus de coulée en sable, comprenant les étapes consistant à :
mélanger du sable (1) et un premier composant liant (2), le résultat étant une poudre (3) ;
disposer une couche (4) de la poudre (3) sur une boîte de travail (5), la couche (4) recouvrant une première zone (6) ;
disposer un second composant liant (7) sur la couche (4) de poudre (3) disposée au niveau d'une première sous-partie (8) de la première zone (6), la première zone (6) comprenant ainsi la première sous-partie (8) comprenant la couche (4) de la poudre (3) disposée et le second composant liant (7) et une seconde sous-partie (9) comprenant la couche (4) de la poudre (3) mais pas de second composant liant (7), la première sous-partie (8) entourant la seconde sous-partie (9), une couche durcie (10) étant créée au niveau de la première sous-partie (8) lorsque le second composant liant (7) et la couche (4) de la poudre (3) interagissent ;
répéter l'étape consistant à disposer une couche (4) de la poudre (3) et l'étape consistant à disposer un second composant liant (7) sur la couche (4) de poudre (3) pour qu'une pluralité de couches (4) durcies soient appliquées les unes sur les autres jusqu'à ce qu'un noyau en sable complet (11) pourvu d'une coque (12) comprenant la pluralité de couches (4) durcies soit créé.

2. Procédé pour la création d'un noyau en sable pour un processus de coulée en sable selon la revendication 1, dans lequel le second composant liant (7) est disposé sur la couche (4) de poudre (3) d'une manière telle que la première sous-partie (8) a une épaisseur minimale (13), l'épaisseur minimale (13) étant déterminée par le fait que le procédé comprend l'étape consistant à déterminer l'épaisseur minimale (13) de la première sous-partie (8) pour que la coque (12) puisse résister à la chaleur et la pression dans une étape de processus de coulée subséquente.

3. Procédé pour la création d'un noyau en sable pour un processus de coulée en sable selon la revendication 2, dans lequel la détermination de l'épaisseur minimale (13) de la première sous-partie (8) est effectuée sur la base du calcul d'une estimation d'une énergie thermique transférée à partir d'une masse fondue (14) qui doit être versée sur le noyau en sable complet (11) ou à l'extérieur de celui-ci sur la base d'un certain nombre de paramètres, le certain nombre de paramètres à prendre en compte comprenant un ou plusieurs paramètres parmi la température de la masse fondue (14), la résistance structurelle du second composant liant (7), le type de sable (1) utilisé, la taille des particules de sable (1).

4. Procédé pour la création d'un noyau en sable pour un processus de coulée en sable selon l'une quelconque des revendications 1-3, dans lequel le premier composant liant (2) est un liant durcissant à froid tel qu'un liant phénolique, un liant furane ou un liant silicate entre autres.

5. Procédé pour la création d'un noyau en sable pour un processus de coulée en sable selon l'une quelconque des revendications 1-4, dans lequel l'étape consistant à disposer un second composant liant (7) comprend également la disposition du second composant (7) au niveau de la seconde sous-partie (9) suivant un motif qui crée au moins un élément d'armature (15) lorsque le second composant liant (7) et la couche (4) de la poudre (3) interagissent dans le motif de la seconde sous-partie (9) .

6. Procédé pour l'utilisation d'un noyau en sable créé selon le procédé de l'une quelconque des revendications 1-5, comprenant les étapes consistant à
démarrer un processus de coulée en versant une masse fondue (14) autour du noyau en sable complet créé (11) et laisser la masse fondue (14) se solidifier ;
enlever le matériau restant provenant de la première sous-partie (8) et la poudre (3) sur laquelle le second composant liant (7) n'a pas été disposé lorsque la masse fondue (14) s'est en grande partie solidifiée.

7. Système fourni pour créer un noyau en sable pour un processus de coulée en sable, comprenant
une unité de mélange (16) conçue pour le mélange de sable (1) et d'un premier composant liant (2) en une poudre (3) ;
une première unité de disposition (17) raccordée à l'unité de mélange (16) conçue pour la disposition d'une couche (4) de la poudre (3) sur une boîte de travail (5), la couche recouvrant une première zone (6) ;
une seconde unité de disposition (18) conçue pour la disposition d'un second composant liant (7) sur la couche (4) de poudre (3) disposée au niveau d'une première sous-partie (8) de la première zone (6), la première zone (6) comprenant ainsi la première sous-partie (8) comprenant la couche (4) de la poudre (3) disposée et le second composant liant (7) et une seconde sous-partie (9) comprenant la couche (4) de la poudre (3) mais pas de second composant liant (7), la première sous-partie (8) entourant la seconde sous-partie (9), une couche (4) durcie étant créée au niveau de la première sous-partie (8) lorsque le second composant liant (7) et la couche (4) de la poudre (3) interagissent ;
dans lequel la première unité de disposition (17) et la seconde unité de disposition (18) sont conçues pour la répétition de la disposition d'une couche (4) de la poudre (3) et de la disposition d'un second composant liant (7) sur la couche (4) de poudre (3) pour qu'une pluralité de couches (4) durcies soient appliquées les unes sur les autres jusqu'à ce qu'un noyau en sable complet (11) pourvu d'une coque (12) comprenant la pluralité de couches (4) durcies soit créé.
